(19)

**Europäisches Patentamt**
**European Patent Office**
**Office européen des brevets**

(11)　**EP 4 454 752 A1**

(12)　　　　　**EUROPEAN PATENT APPLICATION**

(43) Date of publication:
**30.10.2024　Bulletin 2024/44**

(21) Application number: **23208714.8**

(22) Date of filing: **09.11.2023**

(51) International Patent Classification (IPC):
*B01J 20/10* (2006.01)　　*B01J 20/28* (2006.01)
*B01J 20/30* (2006.01)　　*G21F 9/12* (2006.01)
*C02F 1/28* (2023.01)　　*C01B 33/26* (2006.01)
*B01J 20/12* (2006.01)　　*B01J 20/16* (2006.01)
*C02F 101/00* (2006.01)

(52) Cooperative Patent Classification (CPC):
**B01J 20/10; B01J 20/12; B01J 20/28057;**
**B01J 20/28083; B01J 20/30; B01J 20/3085;**
**C01B 33/26; C02F 1/281; G21F 9/12;**
C02F 2101/006; C02F 2103/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **24.04.2023　KR 20230053238**
**25.09.2023　KR 20230127856**

(71) Applicant: **Giant Chemical Co., Ltd**
**Yangsan-si Gyeongsangnam-do 50567 (KR)**

(72) Inventors:
 • **Kang, Dong Gyun**
 **44784 Ulsan (KR)**
 • **Kim, Dong Hyun**
 **44784 Ulsan (KR)**
 • **Choi, Bong Seok**
 **44784 Ulsan (KR)**

 • **Kim, Dae Uk**
 **44784 Ulsan (KR)**
 • **Kang, Jin Kyu**
 **44784 Ulsan (KR)**
 • **Han, Seung Yun**
 **44784 Ulsan (KR)**
 • **Seong, Dong Min**
 **44784 Ulsan (KR)**
 • **Kim, Ho Jae**
 **44784 Ulsan (KR)**
 • **Jo, Su Jin**
 **44784 Ulsan (KR)**
 • **Kim, Seo Yoon**
 **44784 Ulsan (KR)**
 • **Choi, Bo Gyeong**
 **44784 Ulsan (KR)**

(74) Representative: **Gulde & Partner**
**Patent- und Rechtsanwaltskanzlei mbB**
**Wallstraße 58/59**
**10179 Berlin (DE)**

(54)　**RADIOACTIVE ELEMENT ADSORBENT INCLUDING ALUMINUM SILICATE AND PRODUCTION METHOD THEREFOR**

(57)　The present disclosure relates to a radioactive element adsorbent including an aluminum silicate and a production method therefor, and more specifically, to a radioactive element adsorbent for cesium, cobalt and strontium removal including an aluminum silicate and a production method therefor. According to the present disclosure, it is possible to specify the pore size, specific surface area, element contents, and oxide contents of the aluminum silicate, at which the radioactive element adsorption efficiency of the aluminum silicate may be maximized.

EP 4 454 752 A1

**Description**

**BACKGROUND**

1. Technical Field

The present disclosure relates to a radioactive element adsorbent including an aluminum silicate and a production method therefor, and more specifically, to a radioactive element adsorbent for cesium, cobalt and strontium removal including an aluminum silicate and a production method therefor.

2. Related Art

Nanoporous materials with large specific surface areas and uniform pores are widely used as adsorbents, catalyst supports, and in separation and purification processes, and as ion exchange media. In particular, the synthesis of new nanostructured materials with controlled porosity continues to be studied in the field of new materials.

Thereamong, aluminum silicates are inorganic porous materials synthesized through the precipitation reaction of a water-soluble aluminum salt and sodium silicate, and may be used in applications, including industrial applications, food refining, and cosmetic raw materials, based their strong adsorption performance.

Meanwhile, as energy dependence on nuclear power plants has gradually increased worldwide, disposal of radioactive waste that may arise from nuclear power plant accidents has emerged as a major problem.

Radioactive cesium ($^{137}$Cs) is a substance that is the main cause of radioactive contamination caused by nuclear power plant accidents and nuclear waste. It has high water solubility and a long half-life and exhibits behavior similar to potassium ions in the body, and thus when it is absorbed into the human body, it is not excreted easily, which can cause various cancers such as lung cancer and bone marrow cancer. Therefore, the need for technology to remove radioactive cesium has emerged.

Cobalt (Co) is a radioactive nuclide that does not exist in nature. When cobalt is exposed to a high-temperature and high-pressure environment during the operation of a nuclear power plant, it reacts with water or dissolved oxygen to form corrosion products and also forms an oxide layer on the cooling water pipeline along with radioactive materials generated from nuclear fuel. In this case, the formed oxide layer consists of components of the coolant contact system, such as iron, chromium, nickel, copper, and cobalt, and reduces the heat transfer efficiency required for cooling, resulting in a decrease in the operating efficiency of the nuclear power plant.

Strontium (Sr) is a silver-white, soft alkaline earth metal that is softer and more reactive than calcium. It reacts violently in water to generate strontium hydroxide ($Sr(OH)_2$) and hydrogen gas ($H_2$), and burns in air to generate strontium oxide and strontium nitride. Cesium and strontium, radioactive nuclides that are formed in large quantities during nuclear fission of uranium, must be removed from radioactive contaminated water due to their high heat-emitting properties and long half-life (30 years or more).

However, due to the various chemical substances present in radioactive liquid waste and due to problems such as foam generation and corrosion during operation, operating conditions are difficult and smooth treatment is difficult. Therefore, methods using adsorbents to efficiently remove radioactive elements have been considered.

[Prior Art Documents]

[Patent Documents]

(Patent Document 0001) Korean Patent Application Publication No. 10-2018-0050190

**SUMMARY**

An object of the present disclosure is to provide a radioactive element adsorbent including an aluminum silicate capable of adsorbing cesium, cobalt and strontium.

Another object of the present disclosure is to specify the pore size, specific surface area, element contents, and oxide contents of the aluminum silicate, at which cobalt removal efficiency may be maximized.

Still another object of the present disclosure is to provide a method for producing a radioactive element adsorbent for cesium, cobalt and strontium removal including an aluminum silicate.

Objects to be achieved by the disclosure are not limited to the objects mentioned above, and other objects not mentioned herein may be clearly understood by those skilled in the art from the following description of the present disclosure.

The present disclosure provides a radioactive element adsorbent including an aluminum silicate.

In the present disclosure, the radioactive element may be at least one selected from the group consisting of cesium, cobalt and strontium.

In the present disclosure, the aluminum silicate may have a pore size of 30.5 to 32.5 Å and a specific surface area of 500 to 600 m$^2$/g.

In the present disclosure, the aluminum silicate may have an aluminum (Al) content of 10 to 12 wt%, a silicon (Si) content of 28 to 31 wt%, and an aluminum: silicon (Al:Si) ratio of 1:2 to 3.

In the present disclosure, the aluminum silicate may have an $Al_2O_3$ content of 23 to 25 wt%, a $SiO_2$ content of 70 to 73 wt%, and an $Al_2O_3$: $SiO_2$ ratio of 1:2.5 to 3.5.

The present disclosure also provides a method for producing a radioactive element adsorbent including an aluminum silicate, the method including steps of:

preparing an aluminum salt dilution with an aluminum salt concentration of 10 to 20 wt% by diluting in water at least one water-soluble aluminum salt selected from the group consisting of aluminum nitrate, aluminum sulfate, and aluminum chloride;

synthesizing an aluminum silicate at 20 to 60°C by mixing the prepared aluminum salt dilution and a silicate precursor; and

water-washing and drying the synthesized aluminum silicate.

In the present disclosure, the method for producing a radioactive element adsorbent may further include a step of adding, to the aluminum salt dilution, at least one pH adjusting agent selected from the group consisting of ammonium nitrate, ammonium citrate, and sodium citrate.

The present disclosure may provide a radioactive element adsorbent including an aluminum silicate capable of adsorbing cesium, cobalt, and strontium.

In addition, the present disclosure may specify the pore size, specific surface area, element contents, and oxide contents of the aluminum silicate, at which cobalt removal efficiency may be maximized.

In addition, the present disclosure may provide a method for producing a radioactive element adsorbent for cesium, cobalt and strontium removal including an aluminum silicate.

Effects of the present disclosure are not limited to the above-mentioned effects, and other effects not mentioned herein may be clearly understood by those skilled in the art from the appended claims.

## BRIEF DESCRIPTION OF THE DRAWINGS

FIG. is a schematic diagram showing a process of synthesizing an aluminum silicate according to the present disclosure.

FIG. 2 depicts photographs showing the change in color of the aluminum silicate according to the present disclosure after cesium adsorption.

FIG. 3 depicts photographs showing the change in color of the aluminum silicate according to the present disclosure after cobalt adsorption.

FIG. 4 depicts photographs showing the change in color of the aluminum silicate according to the present disclosure after strontium adsorption.

FIG. 5 is a schematic diagram showing the mechanism by which the aluminum silicate according to the present disclosure adsorbs radioactive elements.

## DETAILED DESCRIPTION

The terms used in the present specification are currently widely used general terms selected in consideration of their functions in the present disclosure, but they may change depending on the intents of those skilled in the art, precedents, or the advents of new technology. Additionally, in certain cases, there may be terms arbitrarily selected by the applicant, and in this case, their meanings are described in a corresponding description part of the present disclosure. Accordingly, the terms used in the present disclosure should be defined based on the meaning of the term and the entire contents of the present disclosure, rather than the simple term name.

Unless otherwise defined, all terms used herein, including technical and scientific terms, have the same meaning as commonly understood by those skilled in the art to which the present disclosure pertains. The terms used in general and defined in dictionaries should be interpreted as having meanings identical to those specified in the context of related technology. Unless definitely defined in the present application, the terms should not be interpreted as having ideal or excessively formative meanings.

A numerical range includes numerical values defined in the range. Every maximum numerical limitation given throughout the present specification includes every lower numerical limitation, as if such lower numerical limitations were expressly written herein. Every minimum numerical limitation given throughout the present specification will include every higher numerical limitation, as if such higher numerical limitations were expressly written herein. Every numerical range given throughout the present specification will include every narrower numerical range that falls within such broader numerical range, as if such narrower numerical ranges were all expressly written herein.

Hereinafter, the present disclosure will be described in detail.

**Radioactive element adsorbent including aluminum silicate**

The present disclosure provides a radioactive element adsorbent including an aluminum silicate.

The radioactive element may be at least one selected from the group consisting of cesium, cobalt, and strontium, and is preferably cobalt.

The pore size of the aluminum silicate may be 30.5 to 32.5 Å, preferably 31 to 32 Å.

The weight of the aluminum silicate may be 0.2 to 0.3 g, preferably 0.22 to 0.26 g.

The specific surface area of the aluminum silicate may be 500 to 600 $m^2/g$, and preferably 520 to 580 $m^2/g$.

The pore volume of the aluminum silicate may be 0.4 to 0.5 $cm^3/g$, preferably 0.4 to 0.46 $cm^3/g$.

The cesium removal efficiency of the aluminum silicate may be 95 to 100%, preferably 97 to 100%. The cesium removal efficiency may be determined by calculation according to the following Equation 1, where $C_i$ is the initial metal ion concentration and $C_\varepsilon$ is the metal ion concentration after adsorption.

Likewise, the cobalt removal efficiency of the aluminum silicate may be 95 to 100%, preferably 97 to 100%. The cobalt removal efficiency may be determined by calculation according to the following Equation 1, where $C_i$ is the initial metal ion concentration and $C_\varepsilon$ is the metal ion concentration after adsorption.

Likewise, the strontium removal efficiency of the aluminum silicate may be 95 to 100%, preferably 97 to 100%. The strontium removal efficiency may be determined by calculation according to the following Equation 1, where $C_i$ is the initial metal ion concentration and $C_\varepsilon$ is the metal ion concentration after adsorption.

[Formula 1]

$$\frac{C_i - C_f}{C_i} \times 100$$

The aluminum silicate is capable of adsorbing the radioactive element cobalt, and may change color to pink when adsorbed cobalt.

The aluminum silicate may have an aluminum (Al) content of 10 to 12 wt%, a silicon (Si) content of 28 to 31 wt%, and an aluminum: silicon (Al:Si) ratio of 1:2 to 3. Preferably, the aluminum silicate may have an aluminum (Al) content of 11.6 wt%, a silicon (Si) content of 29.3 wt%, and an aluminum: silicon (Al:Si) ratio of 1:2.52.

The aluminum silicate may have an $Al_2O_3$ content of 23 to 25 wt%, a $SiO_2$ content of 70 to 73 wt%, and an $Al_2O_3$: $SiO_2$ ratio of 1:2.5 to 3.5. Preferably, the aluminum silicate may have an $Al_2O_3$ content of 24.1 wt%, a $SiO_2$ content of 71.6 wt%, and an $Al_2O_3$: $SiO_2$ ratio of 1:2.97.

**Method for producing radioactive element adsorbent including aluminum silicate**

The present disclosure also provides a method for producing a radioactive element adsorbent including an aluminum silicate.

The method for producing a radioactive element adsorbent may include steps of:

preparing an aluminum salt dilution with an aluminum salt concentration of 10 to 20 wt% by diluting in water at least one water-soluble aluminum salt selected from the group consisting of aluminum nitrate, aluminum sulfate, and aluminum chloride;

synthesizing an aluminum silicate at 20 to 60°C by mixing the prepared aluminum salt dilution and a silicate precursor; and

water-washing and drying the synthesized aluminum silicate.

In addition, the method for producing a radioactive element adsorbent may further include a step of adding, to the aluminum salt dilution, at least one pH adjusting agent selected from the group consisting of ammonium nitrate, ammonium citrate, and sodium citrate. Preferably, ammonium nitrate may be used as the pH adjusting agent.

The step of preparing an aluminum salt dilution with an aluminum salt concentration of 10 to 20 wt% by diluting in water at least one water-soluble aluminum salt selected from the group consisting of aluminum nitrate, aluminum sulfate, and aluminum chloride may be a step of preparing an aluminum salt dilution as a transparent solution by diluting at least one water-soluble aluminum salt selected from the group consisting of aluminum nitrate, aluminum sulfate, and aluminum chloride in water at a concentration of 10 to 20%(w/v).

The step of synthesizing an aluminum silicate at 20 to 60°C by mixing the prepared aluminum salt dilution and a silicate precursor may be a step of synthesizing aluminum silicate by adding a silicate precursor to the prepared aluminum salt dilution at a uniform rate. To the prepared aluminum salt dilution, at least one pH adjusting agent selected from the group consisting of ammonium nitrate, ammonium citrate, and sodium citrate may be added.

The silicate precursor may be at least one selected from the group consisting of silica ($SiO_2$), sodium silicate, tetramethyl orthosilicate, tetraethyl orthosilicate, tetrapropyl orthosilicate, triethoxyethylsilane (TEES), and 1,2-bis(triethoxysilyl)ethane (BTSE), and is preferably sodium silicate.

In the step of synthesizing an aluminum silicate at 20 to 60°C by mixing the prepared aluminum salt dilution and a silicate precursor, the synthesis of the aluminum silicate may be performed at 20 to 60°C for 10 to 50 minutes. The ratio of silicon atoms to aluminum atoms (Si/Al) in the synthesized aluminum silicate may be 2 to 5.

The step of water-washing and drying the synthesized aluminum silicate may be a step of removing residual impurities from the surface of the synthesized aluminum silicate. In this step, the aluminum silicate particles may be washed with water. Preferably, the particles may be washed 2 to 4 times with water, and then dried in a drying oven at 80 to 120°C for 1 to 3 hours.

Hereinafter, examples of the present disclosure will be described in detail, but it is obvious that the present disclosure is not limited by the following examples.

**Example 1. Production of radioactive element adsorbent including aluminum silicate**

**1-1. Reagents and materials**

Aluminum sulfate octadecahydrate, aluminum nitrate nonahydrate, aluminum chloride hexahydrate, cetyltrimethylammonium bromide, and ammonium bicarbonate were purchased from Samchun Chemical. Ammonium hydroxide, sodium citrate, ammonium nitrate, ammonium citrate, and methanol were purchased from Daejung Chemical. Pluronic P123 was purchased from Sigma Aldrich, and Konix KE-810 was purchased from KPX Chemicals. Sodium silicate (29%) used as a silicate precursor was purchased from Ilsan Chemical.

**1-2. Synthesis of aluminum silicate**

An aluminum silicate was synthesized by the precipitation reaction of an aluminum sulfate salt ($Al(SO_4)_3$) and sodium silicate (14.5%). More specifically, an aluminum salt solution was prepared by diluting aluminum sulfate ($Al(SO_4)_3$) in water to a concentration of 16.5% and stirring until a transparent solution was obtained. The pH of the aluminum salt dilution was adjusted to ammonium nitrate as a pH adjusting agent, followed by stirring and heating. Thereafter, an aluminum silicate was synthesized by adding sodium silicate to the aluminum salt solution at a uniform rate via a metering pump. In the synthesis step, the ratio of silicon atoms to aluminum atoms (Si/Al) was set to 3.5, stirring was performed at 150 rpm using a magnetic bar, and synthesis of the aluminum silicate was performed at a temperature of 40°C for 30 minutes.

**1-3. Water washing and drying of aluminum silicate**

To remove residual impurities from the surface of the aluminum silicate particles produced in Example 1-2, the particles were washed with water. More specifically, the particles were washed a total of three times with 1 L of water and dried in a drying oven at 105°C for 2 hours.

**Comparative Example 1. Production of aluminum silicate with changed aluminum sulfate concentration**

In order to examine the radioactive element adsorption ability depending on the concentration of aluminum sulfate, an aluminum silicate was produced in the same manner as in Example 1 above, except that the concentration of the aluminum sulfate salt was changed from 16.5% to 8.25%.

**Comparative Example 2. Production of illite**

Illite is generally produced through mining and then separate crushing and drying processes.

**Experimental Example 1. Analysis of specific surface area of aluminum silicate according to the present disclosure**

Experimental Example 1 was conducted to analyze the specific surface areas (BETs) of the aluminum silicates and illite produced in Example 1, Comparative Example 1, and Comparative Example 2, respectively. In Experimental Example 1, the specific surface area, pore volume, and pore size were analyzed, and the results of Experimental Example 1 are shown in Table 1 below.

From the results of Experimental Example 1, it was confirmed that the aluminum silicate produced in Example 1 had a specific surface area of 551.2568 $m^2/g$, a pore volume of 0.4339 $cm^3/g$, and a pore size of 31.486 Å, the aluminum silicate produced in Comparative Example 1 had a specific surface area of 212.93 $m^2/g$, a pore volume of 0.7474 $cm^3/g$, and a pore size of 33.715 Å, and the illite produced in Comparative Example 2 had a specific surface area of 10.1502 $m^2/g$, a pore volume of 0.0292 $cm^3/g$, and a pore size of 115.30 Å (Table 1).

[Table 1]

| Products | Specific surface area ($m^2/g$) | Pore volume ($cm^3/g$) | Pore size (Å) |
|---|---|---|---|
| Example 1 | 551.2568 | 0.4339 | 31.486 |
| Comparative Example 1 | 212.93 | 0.7474 | 33.715 |
| Comparative Example 2 | 10.1502 | 0.0292 | 115.30 |

**Experimental Example 2. Cesium removal efficiency of aluminum silicate according to the present disclosure**

Experimental Example 2 was conducted to examine the cesium (Cs) removal efficiencies of the aluminum silicates and illite produced in Example 1, Comparative Example 1, and Comparative Example 2, respectively.

126 mg of cesium chloride was dissolved in 1 L of distilled water and dispersed using ultrasonic vibration for 10 minutes. While stirring 100 mL of the dispersion at 300 rpm, 1 g of each of the aluminum silicate and illite adsorbents produced in Example 1, Comparative Example 1, and Comparative Example 2, respectively, was added to the dispersion. The mixed solution of the dispersion and each adsorbent was centrifuged at 8,000 rpm for 5 minutes and the supernatant was collected. The residual cesium concentration of each supernatant was analyzed by inductively coupled plasma-mass spectrometry (ICP-MS), and the results of Experimental Example 2 are shown in Table 2 below.

The results of Experimental Example 2 showed that the cesium removal efficiency of the aluminum silicate produced in Example 1 was 99.70%, the cesium removal efficiency of the aluminum silicate produced in Comparative Example 1 was 99.74%, and the cesium removal efficiency of the illite produced in Comparative Example 2 was 21.0%. The cesium removal efficiency was calculated using the following Equation 1, where $C_i$ denotes the initial metal ion concentration, and $C_\varepsilon$ denotes the metal ion concentration after adsorption.

$$[Equation\ 1]$$

$$\frac{C_i - C_f}{C_i} \times 100$$

[Table 2]

| Products | ICP-MS | |
|---|---|---|
| | Residual amount(Cs) (mg/L) | Removal efficiency(Cs) (%: based on 100 ppm) |
| Example 1 | 0.298 | 99.70 |
| Comparative Example 1 | 0.260 | 99.74 |
| Comparative Example 2 | 79.0 | 21.00 |

**Experimental Example 3. Color change of aluminum silicate according to the present disclosure after cesium adsorption**

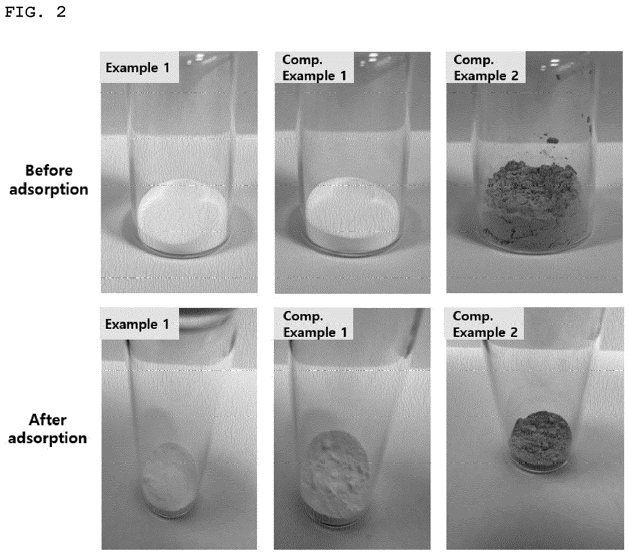

Experimental Example 3 was conducted to observe the color change after cesium adsorption of each of the aluminum silicates and illite produced in Example 1, Comparative Example 1, and Comparative Example 2, respectively. The method of adsorbing cesium using the aluminum silicate or the illite was carried out in the same manner as in Experimental Example 2. The results of observing the color change of the aluminum silicate after adsorbing cesium are shown in FIG. 2.

The results of Experimental Example 3 indicated that the color change after cesium adsorption was observed in none of the aluminum silicates and illite produced in Example 1, Comparative Example 1, and Comparative Example 2, respectively (FIG. 2).

**Experimental Example 4. Cobalt removal efficiency of aluminum silicate according to the present disclosure**

Experimental Example 4 was conducted to examine the cobalt removal efficiencies of the aluminum silicates and illite produced in Example 1, Comparative Example 1, and Comparative Example 2, respectively.

493.8 mg of cobalt nitrate was dissolved in 1 L of distilled water and dispersed using ultrasonic vibration for 10 minutes. While stirring 100 mL of the dispersion at 300 rpm, 1 g of each of the aluminum silicate and illite adsorbents produced in Example 1, Comparative Example 1, and Comparative Example 2, respectively, was added to the dispersion. The mixed solution of the dispersion and each adsorbent was centrifuged at 8,000 rpm for 5 minutes and the supernatant was collected. The residual cobalt concentration of each supernatant was analyzed by inductively coupled plasma-mass spectrometry (ICP-MS), and the results of Experimental Example 4 are shown in Table 3 below.

The results of Experimental Example 4 showed that the cobalt removal efficiency of the aluminum silicate produced in Example 1 was 98.14%, the cobalt removal efficiency of the aluminum silicate produced in Comparative Example 1 was 82.40%, and the cesium removal efficiency of the illite produced in Comparative Example 2 was 10.1%. The cobalt removal efficiency was calculated using the above Equation 1, where $C_i$ denotes the initial metal ion concentration, and $C_\varepsilon$ denotes the metal ion concentration after adsorption.

[Table 3]

| Products | ICP-MS | |
|---|---|---|
| | Residual amount(Co) (mg/L) | Removal efficiency(Co) (%: based on 100 ppm) |
| Example 1 | 1.86 | 98.14 |
| Comparative Example 1 | 17.6 | 82.40 |
| Comparative Example 2 | 89.9 | 10.1 |

**Experimental Example 5. Color change of aluminum silicate according to the present disclosure after cobalt adsorption**

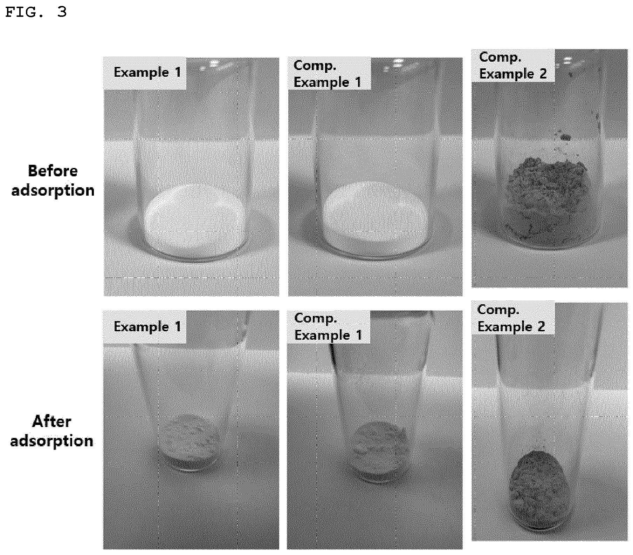

Experimental Example 5 was conducted to observe the color change after cobalt adsorption of each of the aluminum silicates and illite produced in Example 1, Comparative Example 1, and Comparative Example 2, respectively. The method of adsorbing cobalt using the aluminum silicate according to Example 1 was carried out in the same manner as in Experimental Example 4. The results of observing the color change of the aluminum silicates and the illite after adsorbing cobalt are shown in FIG. 3.

The results of Experimental Example 5 showed that the color of the aluminum silicate of Example 1 changed to pink after cobalt adsorption, and the aluminum silicate of Comparative Example 1 and the illite of Comparative Example 2 did not change color after cobalt adsorption. (FIG. 3).

**Experimental Example 6. Strontium removal efficiency of aluminum silicate according to the present disclosure**

Experimental Example 6 was conducted to examine the strontium removal efficiencies of the aluminum silicates and illite produced in Example 1, Comparative Example 1, and Comparative Example 2, respectively.

180.9 mg of strontium chloride was dissolved in 1 L of distilled water and dispersed using ultrasonic vibration for 10 minutes. While stirring 100 mL of the dispersion at 300 rpm, 1 g of each of the aluminum silicate and illite adsorbents produced in Example 1, Comparative Example 1, or Comparative Example 2, respectively, was added to the dispersion.

The mixed solution of the dispersion and each adsorbent was centrifuged at 8,000 rpm for 5 minutes and the supernatant was collected. The residual strontium concentration of each supernatant was analyzed by inductively coupled plasma-mass spectrometry (ICP-MS), and the results of Experimental Example 6 are shown in Table 4 below.

The results of Experimental Example 6 showed that the strontium removal efficiency of the aluminum silicate produced in Example 1 was 99.76%, the strontium removal efficiency of the aluminum silicate produced in Comparative Example 1 was 99.06%, and the cesium removal efficiency of the illite produced in Comparative Example 2 was 16.0%. The strontium removal efficiency was calculated using the above Equation 1.

[Table 4]

| Products | ICP-MS | |
|---|---|---|
| | Residual amount(Sr) (mg/L) | Removal efficiency(Sr) (%: based on 100 ppm) |
| Example 1 | 0.245 | 99.76 |
| Comparative Example 1 | 0.944 | 99.06 |
| Comparative Example 2 | 84.0 | 16.0 |

**Experimental Example 7. Color change of aluminum silicate according to the present disclosure after strontium adsorption**

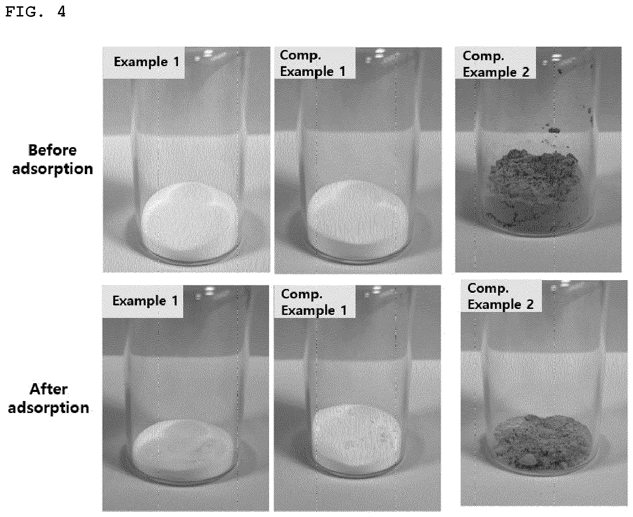

Experimental Example 3 was conducted to observe the color change after strontium adsorption of each of the aluminum silicates and illite produced in Example 1, Comparative Example 1, and Comparative Example 2, respectively. The method of adsorbing strontium using the aluminum silicate or the illite was carried out in the same manner as in Experimental Example 6. The results of observing the color change of the aluminum silicate after adsorbing cesium are shown in FIG. 4.

The results of Experimental Example 7 indicated that the color change after strontium adsorption was observed in none of the aluminum silicates and illite produced in Example 1, Comparative Example 1, and Comparative Example 2, respectively (FIG. 4).

**Experimental Example 8. Element contents of aluminum silicate according to the present disclosure**

The applicant analyzed the element contents of the aluminum silicates and illite produced in Example 1, Comparative Example 1, and Comparative Example 2, respectively.

The compositions of the aluminum silicates and the illite were analyzed using a SEM (EmCraft cube II) equipped with an EDS detector (Xplore compact 30), and the AZtecOne software.

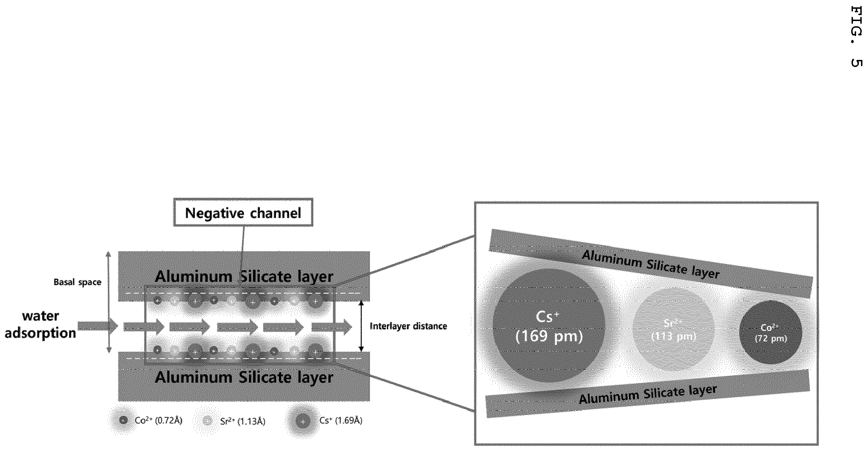

The results of Experimental Example 8 showed that the Al:Si ratio of the aluminum silicate of Example 1 was 1:2.08, and at this ratio, the ability to adsorb cesium, cobalt, and strontium, radioactive elements, was the best (Table 5). This is believed to be because water containing radioactive ions is absorbed between the aluminum silicate layers due to the high specific surface area of the aluminum silicate of Example 1, and the radioactive ions are trapped not only in the negative channels formed between the aluminum silicate layers, but also in a lot of spaces where the radioactive ions can become trapped (see FIG. 5). It is believed that, in the case of the illite produced in Comparative Example 2, the proportion of silicate was high, but the ability of the illite to adsorb cesium, cobalt and strontium, radioactive elements, was low due to the coexistence of K, Fe, and Al ions.

[Table 5]

| Products | Element content (%) | | | | | | |
|---|---|---|---|---|---|---|---|
| | Al | Si | Mg | K | Fe | Al:Si ratio | Mg:Si ratio |
| Example 1 | 32.52 | 67.48 | - | - | - | 1 : 2.08 | - |
| Comparative Example 1 | 16.38 | 83.62 | - | - | - | 1:5.11 | - |
| Comparative Example 2 | 20.98 | 50.11 | 0.71 | 10.50 | 17.70 | 1 : 2.39 | 1 : 70.58 |

**Experimental Example 9. Analysis of adsorption ability depending on ion sizes of radioactive elements**

The ion sizes of radioactive elements cesium ($Cs^+$), cobalt ($Co^{2+}$), and strontium ($Sr^{2+}$) are shown in Table 6 below, and the adsorption ability depending on the ion sizes was compared. Referring to Table 6, the ion size of cesium ($Cs^+$) was 169 pm, the ion size of cobalt ($Co^{2+}$) was 72 pm, and the ion size of strontium ($Sr^{2+}$) was 113 pm. These ion sizes are smaller in the order of cobalt ($Co^{2+}$) < strontium ($Sr^{2+}$) < cesium ($Cs^+$), suggesting that that enough space is secured between the negative channels in the aluminum silicate, and thus the aluminum silicate removes strontium ($Sr^{2+}$), cesium ($Cs^+$), and cobalt ($Co^{2+}$) ions with high efficiency.

[Table 6]

| Element name | Ion size* (pm) |
|---|---|
| Cesium (Cs) | 169 |
| Cobalt (Co) | 72 |
| strontium (Sr) | 113 |

**Experimental Example 10. XRF analysis of aluminum silicate**

XRF analysis was performed on the aluminum silicates produced in Example 1 and Comparative Example 1. The XRF analysis was performed in the range of nitrogen to curium using a ZSX Primus IV (Rigaku) instrument, and detection was performed using a scintillation counter (SC) and a flow proportional counter (F-PC).
The results of Experimental Example 10 are shown in Tables 7 and 8 below.

[Table 7]

| Products | XRF analysis results (wt%) | | | | | | | | | |
|---|---|---|---|---|---|---|---|---|---|---|
| | O | Si | Al | Na | F | Ca | K | S | others | Total |
| Example 1 | 56.1 | 29.3 | 11.6 | 1.9 | 0.5 | 0.2 | 0.1 | 0.1 | 0.1 (Mg, Ti, etc.) | 100 |
| Comparative Example 1 | 56.5 | 34.6 | 7.0 | 1.6 | 0.3 | - | - | - | 0.1 (S, Fe, etc.) | 100 |

[Table 8]

| Products | XRF analysis results (wt%) | | | | | | | | |
|---|---|---|---|---|---|---|---|---|---|
| | $SiO_2$ | $Al_2O_3$ | $Na_2O$ | F | $SO_3$ | CaO | $K_2O$ | Others | Total |
| Example 1 | 71.6 | 24.1 | 2.8 | 0.6 | 0.3 | 0.3 | 0.2 | 0.2 (MgO, $TiO_2$, etc.) | 100 |
| Comparative Example 1 | 82.9 | 14.4 | 2.3 | 0.3 | 0.1 | - | - | 0.09 (CaO, $Fe_2O_3$, etc.) | 100 |

The results of Experimental Example 10 showed that the element contents of the aluminum silicate produced in Example 1 were 56.1 wt% oxygen (O), 29.3 wt% silicon (Si), 11.6 wt% aluminum (Al), 1.9 wt% sodium (Na), 0.5 wt% fluorine (F), 0.2 wt% calcium (Ca), 0.1 wt% potassium (K), 0.1 wt% sulfur (S), and 0.1 wt% others (Mg, Ti, etc.). In addition, it was shown that the element contents of the aluminum silicate produced in Comparative Example 1 were 56.5 wt% oxygen (O), 34.6 wt% silicon (Si), 7.0 wt% aluminum (Al), 1.6 wt% sodium (Na), 0.3 wt% fluorine (F), and 및 0.1 wt% others (S, Fe, etc.) (Table 7).

In addition, it was shown that the oxide contents of the aluminum silicate produced in Example 1 were 71.6 wt% $SiO_2$, 24.1 wt% $Al_2O_3$, 2.8 wt% $Na_2O$, 0.6 wt% F, 0.3 wt% $SO_3$, 0.3 wt% CaO, 0.2 wt% $K_2O$, and 0.2 wt% others (MgO, $TiO_2$, etc.). In addition, it was shown that the oxide contents of the aluminum silicate produced in Comparative Example 1 were 82.9 wt% $SiO_2$, 14.4 wt% $Al_2O_3$, 2.3 wt% $Na_2O$, 0.3 wt% F, 0.1 wt% $SO_3$, and 0.09 wt% others (CaO, $Fe_2O_3$, etc.).

**more** specifically, regarding the results of Experimental Example 10, the aluminum silicates produced in Example 1 and Comparative Example 1 had similar contents of elements other than Si and Al, but the Si and Al contents were different between them. The Al:Si ratio of the aluminum silicate produced in Example 1 was 11.6:29.3, that is, 1:2.52, and the Al:Si ratio of the aluminum silicate produced in Comparative Example 1 was 7.0:34.6, that is, 1:4.94.

The Al:Si ratio is shown in Table 9 below.

[Table 9]

| Products | Al : Si ratio | | |
|---|---|---|---|
| | Al | Si | Al : Si |
| Example 1 | 11.6 | 29.3 | 1 : 2.52 |
| Comparative Example 1 | 7.0 | 34.6 | 1 : 4.94 |

Similarly, the aluminum silicates produced in Example 1 and Comparative Example 1 had similar contents of oxides other than $Al_2O_3$ and $SiO_2$, but the $Al_2O_3$ and $SiO_2$ contents were different between them. The $Al_2O_3$:$SiO_2$ ratio of the aluminum silicate produced in Example 1 was 24.1:71.6, that is, 1:2.97, and the $Al_2O_3$:$SiO_2$ ratio of the aluminum silicate produced in Comparative Example 1 was 14.4:82.9, that is, 1:5.75. The $Al_2O_3$:$SiO_2$ ratio is shown in Table 10 below.

[Table 10]

| Products | $Al_2O_3$ : $SiO_2$ ratio | | |
|---|---|---|---|
| | $Al_2O_3$ | $SiO_2$ | $Al_2O_3$ : $SiO_2$ |
| Example 1 | 24.1 | 71.6 | 1 : 2.97 |
| Comparative Example 1 | 14.4 | 82.9 | 1 : 5.75 |

While the present disclosure has been described with reference to the particular exemplary embodiments, those skilled in the art to which the present disclosure pertains will appreciate that the present disclosure may be embodied in other specific forms without departing from the technical spirit or essential characteristics of the present disclosure. Therefore, it should be understood that the embodiments described above are exemplary in all aspects and are not restrictive

### Claims

1. A radioactive element adsorbent comprising an aluminum silicate.

2. The radioactive element adsorbent according to claim 1, wherein the radioactive element is at least one selected from the group consisting of cesium, cobalt and strontium.

3. The radioactive element adsorbent according to claim 1, wherein the aluminum silicate has a pore size of 30.5 to 32.5 Å and a specific surface area of 500 to 600 $m^2$/g.

4. The radioactive element adsorbent according to claim 1, wherein the aluminum silicate has an aluminum (Al) content of 10 to 12 wt%, a silicon (Si) content of 28 to 31 wt%, and an aluminum: silicon (Al:Si) ratio of 1:2 to 3.

5. The radioactive element adsorbent according to claim 1, wherein the aluminum silicate has an $Al_2O_3$ content of 23 to 25 wt%, a $SiO_2$ content of 70 to 73 wt%, and an $Al_2O_3$: $SiO_2$ ratio of 1:2.5 to 3.5.

6. A method for producing a radioactive element adsorbent comprising an aluminum silicate, the method comprising steps of:

preparing an aluminum salt dilution with an aluminum salt concentration of 10 to 20 wt% by diluting in water at least one water-soluble aluminum salt selected from the group consisting of aluminum nitrate, aluminum sulfate, and aluminum chloride;
synthesizing an aluminum silicate at 20 to 60°C by mixing the prepared aluminum salt dilution and a silicate precursor; and
water-washing and drying the synthesized aluminum silicate.

7. The method according to claim 6, further comprising a step of adding, to the aluminum salt dilution, at least one pH adjusting agent selected from the group consisting of ammonium nitrate, ammonium citrate, and sodium citrate.

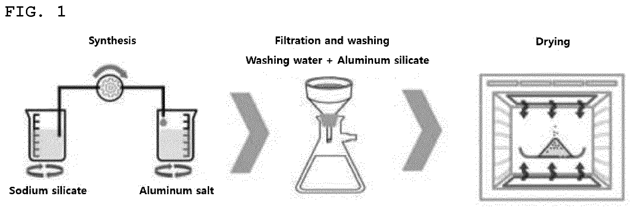

FIG. 1

Synthesis

Filtration and washing

Washing water + Aluminum silicate

Drying

Sodium silicate     Aluminum salt

FIG. 2

FIG. 3

FIG. 4

FIG. 5

Europäisches
Patentamt

European
Patent Office

Office européen
des brevets

**EUROPEAN SEARCH REPORT**

Application Number

EP 23 20 8714

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 860 156 A1 (KYOWA CHEM IND CO LTD [JP]) 15 April 2015 (2015-04-15) * claims 1,3-6 * * paragraphs [0027], [0088] - [0089] * | 1-7 | INV. B01J20/10 B01J20/28 B01J20/30 G21F9/12 C02F1/28 C01B33/26 B01J20/12 B01J20/16 C02F101/00 |
| X | MANUEL ALEJANDRO TRETO-SUÁREZ: "Kinetic study of removal heavy metal from aqueous solution using the synthetic aluminum silicate", SCIENTIFIC REPORTS, [Online] vol. 10, no. 1, 2 July 2020 (2020-07-02), XP093164180, US ISSN: 2045-2322, DOI: 10.1038/s41598-020-67720-0 Retrieved from the Internet: URL:https://www.nature.com/articles/s41598-020-67720-0> [retrieved on 2024-05-17] * tables 3,4 * * Methods, Synthesis of aluminium silicate; page 7 * | 1-7 | |
| X | EP 2 684 847 A1 (HITACHI CHEMICAL CO LTD [JP]) 15 January 2014 (2014-01-15) * paragraph [0192] - paragraph [0193] * * claims 1-4 * | 1-5 | TECHNICAL FIELDS SEARCHED (IPC) B01J G21C G21F C02F C01B |
| X | JP 2006 256891 A (KYOWA CHEM IND CO LTD) 28 September 2006 (2006-09-28) * paragraph [0029] * * claim 1 * | 1-5 | |

The present search report has been drawn up for all claims

| Place of search | Date of completion of the search | Examiner |
|---|---|---|
| The Hague | 22 May 2024 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 8714

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2024

| Patent document cited in search report | | Publication date | Patent family member(s) | | Publication date |
|---|---|---|---|---|---|
| EP 2860156 | A1 | 15-04-2015 | CN | 104254493 A | 31-12-2014 |
| | | | EP | 2860156 A1 | 15-04-2015 |
| | | | JP | WO2013183742 A1 | 01-02-2016 |
| | | | KR | 20150031228 A | 23-03-2015 |
| | | | RU | 2014153007 A | 27-07-2016 |
| | | | TW | 201406658 A | 16-02-2014 |
| | | | US | 2015136707 A1 | 21-05-2015 |
| | | | WO | 2013183742 A1 | 12-12-2013 |
| EP 2684847 | A1 | 15-01-2014 | CN | 103635426 A | 12-03-2014 |
| | | | EP | 2684847 A1 | 15-01-2014 |
| | | | JP | 5958461 B2 | 02-08-2016 |
| | | | JP | WO2012124222 A1 | 17-07-2014 |
| | | | KR | 20140014192 A | 05-02-2014 |
| | | | TW | 201236975 A | 16-09-2012 |
| | | | US | 2014309106 A1 | 16-10-2014 |
| | | | WO | 2012124222 A1 | 20-09-2012 |
| JP 2006256891 | A | 28-09-2006 | NONE | | |

EPO FORM P0459

For more details about this annex : see Official Journal of the European Patent Office, No. 12/82

**REFERENCES CITED IN THE DESCRIPTION**

**Patent documents cited in the description**

- KR 1020180050190